# EUROPÄISCHE PATENTSCHRIFT

(11) **EP 1 797 469 B1**
(45) Veröffentlichungstag und Bekanntmachung des Hinweises auf die Patenterteilung: **29.07.2009**
(21) Anmeldenummer: 05796566.7
(22) Anmeldetag: 04.10.2005
(51) Int. Cl.: G02B 6/38, B29C 61/02, B29D 11/00

(54) **VORRICHTUNG UND VERFAHREN ZUM AUFBRINGEN EINES SCHUTZELEMENTES AUF EINEN LICHTWELLENLEITER**
DEVICE AND METHOD FOR FITTING A PROTECTIVE ELEMENT TO AN OPTICAL FIBRE
DISPOSITIF ET PROCEDE POUR APPLIQUER UN ELEMENT DE PROTECTION SUR UN GUIDE D'ONDE OPTIQUE

(30) Priorität: 05.10.2004 DE 102004048486
(43) Veröffentlichungstag der Anmeldung: 20.06.2007
(73) Patentinhaber: CCS Technology, Inc., Wilmington, DE 19803 (US)
(72) Erfinder: ZAMZOW, Bert, 82131 Gauting-Buchendorf (DE)
(74) Vertreter: Epping - Hermann - Fischer
(86) Internationale Anmeldenummer: PCT/DE2005/001770
(87) Internationale Veröffentlichungsnummer: WO 2006/037309

(56) Entgegenhaltungen:
- EP-A- 0 096 550
- US-A1- 2002 088 796

## Beschreibung

Die Erfindung betrifft eine Vorrichtung und ein Verfahren zum Aufbringen eines durch Wärme schrumpfbaren Schutzelementes auf einen Abschnitt eines lang gestreckten Elements, inbesondere eines Lichtwellenleiters.

### Hintergrund der Erfindung

Damit Lichtwellenleiter beispielsweise durch Fusionsschweißen miteinander verschweißt werden können, werden in der Nähe der zu verschweißenden Stellen die Lichtwellenleiter freigelegt. Hierzu werden die Lichtwellenleiter umgebende Faserbeschichtungen (Coating) entfernt. Nachdem die Lichtwellenleiter beispielsweise miteinander verschweißt worden sind, werden sie gegen Umgebungseinflüsse und mechanische Schäden geschützt. Es kann auch aus anderen Gründen ein Schutz für einen freiliegenden Lichtwellenleiter erforderlich sein.

Üblicherweise wird zum Schutz eines zuvor freigelegten Lichtwellenleiters ein durch Zuführen von Wärme schrumpfbares Schutzelement verwendet. Das Schutzelement ist als Röhre aus einem durch Zuführen von Wärme schrumpfbaren Werkstoff, beispielsweise einem Polymer, ausgebildet. Das Schutzelement wird über einen den freigelegten Teil umgebenden Abschnitt des Lichtwellenleiters geschoben und dann erwärmt. Durch die Erwärmung wird ein Wärmeschrumpfen des Schutzelementes bewirkt. Nach dem Wärmeschrumpfen ist der den freigelegten Teil umgebende Abschnitt des Lichtwellenleiters von dem Schutzelement eng umschlossen. Darüber hinaus kann das Schutzelement an der Oberfläche des freigelegten Lichtwellenleiters anhaften. Auf diese Weise wird der gewünschte Schutz gegen Umgebungseinflüsse und mechanische Schäden erreicht.

Um ein durch Zuführen von Wärme schrumpfbares Schutzelement zu erwärmen, wird ein sogenannter Schrumpfofen verwendet. Üblicherweise enthält der Schrumpfofen eine Wanne mit einer u-oder v-förmigen Rinne zur Aufnahme des Schutzelementes und ein Heizelement zum Beheizen der Wanne.

Ein herkömmlicher Schrumpfofen hat den Nachteil, dass die Wärme vom Heizelement auf das Schutzelement durch Wärmeleitung über die Wanne und durch Konvektion über die Luft übertragen wird. Durch diese indirekte Übertragung der Wärme vom Heizelement auf das Schutzelement liegt die Temperatur zumindest eines Teils der Wanne und die Temperatur zumindest eines Teils der Luft stets über der Temperatur des Schutzelementes. Die Wanne und die Luft weisen jeweils eine beträchtliche Wärmekapazität auf. Daher wird ein großer Teil der durch das Heizelement erzeugten Wärmeleistung zur Erwärmung der Wanne und der Luft verbraucht. Außerdem berühren sich lediglich ein kleiner Teil der Oberfläche der Wanne und ein kleiner Teil der Oberfläche des Schutzelementes. Dadurch können pro Zeiteinheit nur geringe Mengen an Wärme durch Wärmeleitung direkt von der Wanne auf das Schutzelement übertragen werden.

Für den mobilen Einsatz werden Schrumpföfen und entsprechende Fusionsschweißgeräte hergestellt, deren Leistungsversorgung durch Batterien oder Akkumulatoren erfolgt. Der herkömmliche Schrumpfofen verschwendet jedoch eine erhebliche Menge der erzeugten Energie, um das Heizelement, die Wanne und die Luft aufzuheizen. Diese Energie steht nicht mehr zur Verfügung, um Schutzelemente aufzuschrumpfen oder Schweißvorgänge durchzuführen. Infolge dessen reduziert sich die Anzahl der mit einer Batterie- oder Akkuladung durchführbaren Aufschrumpf- und Schweißvorgänge dramatisch.

Zur Übertragung der erforderlichen Menge an Wärme an das Schutzelement benötigt der herkömmliche Schrumpfofen eine entsprechende Zeitspanne. Für die Aufwärmphase, in der das Heizelement, die Wanne, die Luft und das Schutzelement die für ein Auslösen des Aufschrumpfens notwendige Temperatur annehmen, werden ungefähr 45 Sekunden benötigt. Auch für die Aufschrumpfphase, in der das Schutzelement die für den Prozess des Aufschrumpfens benötigte Wärmeenergie aufnimmt, werden ungefähr 45 Sekunden benötigt. Die Leistungsaufnahme des Schrumpfofens beträgt während der Aufwärmphase etwa 20 W und während der Aufschrumpfphase etwa 15 W. Dementsprechend ergibt sich ein Energieverbrauch von 900 Ws für die Aufwärmphase, ein Energieverbrauch von 675 Ws für die Aufschrumpfphase und eine Gesamtdauer des Aufschrumpfvorgangs von ungefähr 90 Sekunden.

Insgesamt lässt sich sagen, dass der Energieverbrauch und der Zeitaufwand für das Aufschrumpfen eines Schutzelements auf einen Lichtwellenleiter unter Verwendung eines herkömmlichen Schrumpfofens unnötig hoch sind. (1) Eine Vorrichtung und Verfahren gemäβ dem Obergriften der Ansprüche 1 und 29 sind aus der US 2002/088796 bekannt.

Dementsprechend ist es die Aufgabe der Erfindung, eine Vorrichtung und ein Verfahren zum schnellen und energiesparenden Aufschrumpfen von Schutzelementen auf lang gestreckte Elemene wie Lichtwellenleiter anzugeben.

Allgemeine Beschreibung der Erfindung Die Aufgabe wird erfindungsgemäß durch eine Vorrichtung mit den Merkmalen des Patentanspruches 1 und durch ein Verfahren mit den Merkmalen des Patentanspruches 29 gelöst.

Die erfindungsgemäße Vorrichtung zum Aufschrumpfen eines durch Zuführen von Wärme schrumpfbaren Schutzelementes auf ein lang gestrecktes Element, insbesondere einen Lichtwellenleiter, umfasst ein Heizelement, das ausgebildet ist, Wärmestrahlung auszusenden, eine Halterung, die dazu ausgebildet ist, das Schutzelement zu halten, und einen Reflektor, der dazu ausgebildet ist, die von dem Heizelement ausgesandte Strahlung zu reflektieren und auf das Schutzelement zu fokussieren, gemäβ dem Anspruch 1.

Die Übertragung der Wärme vom Heizelement auf das Schutzelement erfolgt durch Wärmestrahlung. Die Wärmestrahlung wird vom Heizelement emittiert, durch den Reflektor auf das Schutzelement fokussiert und überwiegend durch das Schutzelement absorbiert. Bei einer geeigneten Wahl der durch das Heizelement emittierten Wellenlänge, des Materials für die reflektierende Fläche des Reflektors und des Werkstoffes für das Schutzelement lässt sich der Leistungsverlust durch Erwärmen des Reflektors und der Luft innerhalb der Vorrichtung minimieren. Dadurch ist für das Aufschrumpfen eines Schutzelementes auf einen Lichtwellenleiter eine geringere Wärmeleistung und entsprechend eine geringere elektrische Leistungsaufnahme erforderlich als bei einem herkömmlichen Schrumpfofen. Außerdem erreicht das Schutzelement schneller eine Temperatur, bei der das Wärmeschrumpfen einsetzt und die für den Schrumpfprozess benötigte Wärmemenge kann in kürzerer Zeit zugeführt werden. Es kann daher mit einem begrenzten Vorrat an Energie eine höhere Anzahl von Schutzelementen in kürzerer Zeit auf Lichtwellenleiter aufgeschrumpft werden.

Das Schutzelement erstreckt sich vorzugsweise in einer Längsrichtung. Das Heizelement erstreckt sich vorzugsweise parallel zu dem Schutzelement in der Längsrichtung und sendet die Wärmestrahlung vorwiegend gleichmäßig in alle zur Längsrichtung senkrechten Richtungen aus.

Der Reflektor weist vorzugsweise eine sich in der Längsrichtung erstreckende reflektierende Fläche auf, deren senkrecht auf der Längsrichtung stehende Querschnitte die Form von Ellipsen aufweisen.

Das Material für die reflektierende Fläche des Reflektors ist so zu wählen, dass die Wärmestrahlung, die vom Heizelement emittiert wird, am Reflektor überwiegend reflektiert und möglichst wenig absorbiert wird. Die reflektierende Fläche ist beispielsweise mit Gold beschichtet.

Da jeweils eine der Ellipsen einen ersten Brennpunkt und einen zweiten Brennpunkt aufweist, ist durch die ersten Brennpunkte der Ellipsen ein erstes Gebiet und durch die zweiten Brennpunkte der Ellipsen ein zweites Gebiet festgelegt. Das Heizelement erstreckt sich vorzugsweise längs des ersten Gebietes und das Schutzelement erstreckt sich vorzugsweise längs des zweiten Gebietes.

Das Heizelement umfasst vorzugsweise einen Draht aus einem elektrisch leitenden Material, das vorwiegend Wärmestrahlung aussendet, wenn es von elektrischem Strom durchflossen ist.

Das Heizelement enthält vorzugsweise einen dem Schutzelement gegenüber liegenden Längsabschnitt, der in Endbereiche und einen dazwischen angeordneten mittleren Bereich eingeteilt ist, wobei der Querschnitt des Drahtes in dem mittleren Bereich eine Verjüngung aufweist.

In Abhängigkeit von für das Schutzelement gewählten Werkstoffen ändert sich die für die Absorption der Wärmestrahlung durch das Schutzelement und der damit verbundenen Erwärmung des Schutzelementes am besten geeignete Wellenlänge. Die von dem Draht vorwiegend emittierte Wellenlänge ist über den Widerstand des Drahtes und die an den Draht angelegte elektrische Spannung steuerbar. Dadurch kann für verschiedene der Werkstoffe eine optimale Kombination des elektrischen Widerstandes des Drahtes und der an den Draht angelegten Spannung gewählt werden.

Der Draht enthält vorzugsweise ein Metall oder eine Legierung und besonders bevorzugt enthält der Draht eine Legierung aus Eisen, Nickel und Aluminium. Ferner ist der Draht vorzugsweise in Form einer Helix gewendelt.

Das Heizelement enthält vorzugsweise einen dem Schutzelement gegenüber liegenden Längsabschnitt, der in Endbereiche und einen dazwischen angeordneten mittleren Bereich eingeteilt ist, wobei eine Ganghöhe der Helix in dem mittleren Bereich einen kleineren Wert aufweist als in den Endbereichen. Im mittleren Bereich sind die Windungen der Helix dichter angeordnet als in den Endbereichen.

Das Heizelement umfasst vorzugsweise ein Trägerelement und der Draht ist vorzugsweise als Spule auf das Trägerelement aufgewickelt. Das Trägerelement kann beispielsweise Keramik enthalten. Das Heizelement ist vorzugsweise aus der Vorrichtung entnehmbar.

Der Reflektor umfasst einen ersten Teil und einen zweiten Teil, die relativ zueinander beweglich sind. Der erste Teil ist mit dem zweiten Teil beispielsweise über ein Scharnier verbunden, so dass der Reflektor aufklappbar ist. Der erste Teil kann auch vom zweiten Teil abnehmbar sein.

Die Vorrichtung umfasst vorzugsweise einen Kühlventilator zur Erzeugung eines Luftstroms um das Schutzelement.

Die Halterung umfasst vorzugsweise Auflageflächen, zwischen denen ein von dem Schutzelement umgebener Abschnitt des Lichtwellenleiters derart lagerbar ist, dass die Wärmestrahlung auf das Schutzelement fokussiert ist.

Das Heizelement kann auch einen Strahler umfassen, der die Strahlung vorwiegend in eine Vorzugsrichtung aussendet. Der Strahler kann beispielsweise eine infrarotes Licht emittierende Diode oder ein ganzes Feld von infrarotes Licht emittierenden Dioden umfassen. Der Strahler kann auch einen Halbleiterlaser umfassen.

Die erfindungsgemäße Vorrichtung umfasst vorzugsweise eine Optik zur Aufweitung eines Strahlbündels der vom Strahler ausgesandten Wärmestrahlung.

Das Schutzelement erstreckt sich vorzugsweise in einer Längsrichtung. Der Reflektor kann eine sich in der Längsrichtung erstreckende reflektierende Fläche aufweisen, deren zu der Längsrichtung senkrechte Querschnitte die Form von Parabeln aufweisen. Jeweils eine der Parabeln weist einen Brennpunkt auf und die Brennpunkte der Parabeln legen ein erstes Gebiet fest, in dem das Schutzelement angeordnet ist.

Die erfindungsgemäße Vorrichtung kann eine Optik umfassen, die in der Längsrichtung verschiebbar oder um eine zu der Längsrichtung senkrechte Achse oszillierbar ist, um ein Strahlbündel der vom Strahler ausgesandten Wärmestrahlung zeitabhängig abzulenken und über das sich in der Längsrichtung erstreckende Schutzelement zu verteilen.

Vorzugsweise ist das Schutzelement in der Längsrichtung in Endbereiche und einen dazwischen angeordneten mittleren Bereich eingeteilt und eine Verweildauer des Strahlbündels in dem mittleren Bereich höher als in den Endbereichen.

Das erfindungsgemäße Verfahren zum Aufschrumpfen eines durch Zuführen von Wärme schrumpfbaren Schutzelementes auf einen Abschnitt eines Lichtwellenleiters umfasst einen Schritt des Bereitstellens des Lichtwellenleiters und eines einen Abschnitt des Lichtwellenleiters umgebenden Schutzelementes, einen Schritt des Aussendens von Wärmestrahlung, einen Schritt des Reflektierens der Wärmestrahlung, einen Schritt des Fokussierens der Wärmestrahlung auf das Schutzelement und einen Schritt des Erwärmens und dadurch bewirkten Aufschrumpfens des Schutzelementes auf den Abschnitt des Lichtwellen-leiters, gemäß dem Anspruch 29.

Der Schritt des Reflektierens der Wärmestrahlung umfasst vorzugsweise den Schritt des Fokussierens der Wärmestrahlung.

Der Schritt des Fokussierens der Wärmestrahlung auf das Schutzelement umfasst vorzugsweise einen Schritt des Fokussierens der Wärmestrahlung auf ein sich in einer Längsrichtung erstreckendes Gebiet.

Der Schritt des Aussendens von Wärmestrahlung umfasst vorzugsweise ein Aussenden von Strahlung in alle zu einer Längsrichtung senkrechten Richtungen.

Der Schritt des Fokussierens der Wärmestrahlung umfasst vorzugsweise ein Erzeugen einer höheren Temperatur in einem zwischen Endbereichen geringerer Temperatur angeordneten mittleren Bereich des Schutzelements.

Kurze Beschreibung der Figuren

Figur 1 zeigt ein Ausführungsbeispiel für die Vorrichtung zum Aufbringen eines durch Wärme schrumpfbaren Schutzelementes gemäß der vorliegenden Erfindung.

Figur 2 zeigt ein Ausführungsbeispiel für eine bevorzugte Geometrie des Reflektors der erfindungsgemäßen Vorrichtung.

Figur 3 zeigt ein Ausführungsbeispiel für ein bevorzugtes Heizelement der erfindungsgemäßen Vorrichtung.

Die Figuren 4A bis 4C zeigen weitere Ausführungsbeispiele für eine bevorzugte Geometrie des Reflektors und für ein bevorzugtes Heizelement.

Die Figuren 5A bis 5C zeigen weitere Ausführungsbeispiele für bevorzugte Heizelemente.

In Figur 6 ist eine alternative Ausgestaltung einer Halterung zur Positionierung des Schutzelements in der Vorrichtung dargestellt.

Figur 7 zeigt eine schematische Seitenansicht der Vorrichtung mit einer Abdeckung für die Wärmestrahlung.

Beschreibung von Ausführungsbeispielen anhand der Figuren

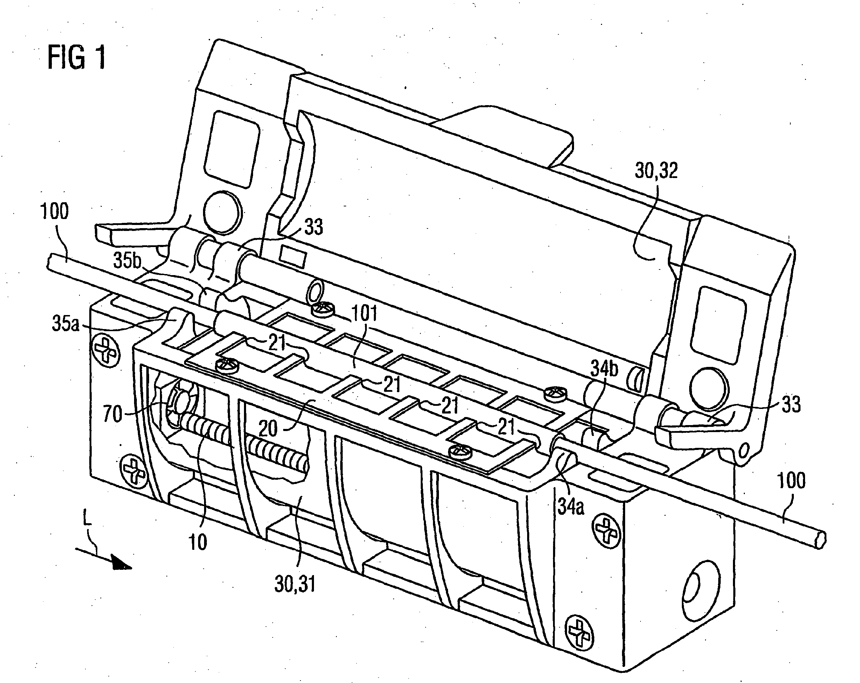

In Figur 1 ist ein Ausführungsbeispiel der erfindungsgemäßen Vorrichtung zum Aufschrumpfen eines Schutzelementes 101 auf einen Lichtwellenleiter 100 perspektivisch dargestellt.

Die Vorrichtung umfasst ein Heizelement 10, eine Halterung für den Lichtwellenleiter 100 und einen Reflektor 30, die in einem gemeinsamen Gehäuse, beispielsweise aus Spritzguss oder Kunststoff, untergebracht sind. Das Schutzelement 101 umgibt einen Abschnitt des Lichtwellenleiters 100. Der Lichtwellenleiter 100 und das ihn umgebende Schutzelement 101 erstrecken sich in einer Längsrichtung L.

Der Reflektor 30 erstreckt sich in der Längsrichtung L über eine bestimmte Länge, ist als Hohlkörper ausgebildet und in das Gehäuse integriert. Der Reflektor 30 umfasst eine reflektierende Fläche, die bezüglich der Längsrichtung L über die gesamte Länge des Reflektors 30 gleiche Querschnitte in der Form von Ellipsen aufweist. Jeweils eine der Ellipsen weist einen ersten und einen zweiten Brennpunkt auf. Durch die ersten Brennpunkte der Ellipsen ist ein erstes Fokusgebiet und durch die zweiten Brennpunkte der Ellipsen ist ein zweites Fokusgebiet festgelegt. Das erste Fokusgebiet enthält die ersten Brennpunkte und das zweite Fokusgebiet enthält die zweiten Brennpunkte der Ellipsen. Die reflektierende Fläche 301 ist als Beschichtung auf die innere Mantelfläche des Reflektors 30 aufgebracht.

Das Gehäuse umfasst einen unteren Teil und einen als beweglicher Deckel darauf angeordneten oberen Teil. Der Reflektor 30 umfasst einen ersten Teil 31 und einen zweiten Teil 32. Der erste Teil 31 des Reflektors umfasst den größeren Teil des Reflektors 30 und ist in den unteren Teil des Gehäuses integriert. Der zweite Teil 32 umfasst den kleineren Teil des Reflektors 30 und ist in den als Deckel vorgesehenen oberen Teil des Gehäuses integriert. Im gezeigten Beispiel ist der obere Teil des Gehäuses, der den zweiten Teil 32 des Reflektors 30 enthält, über Scharniere 33 an dem unteren Teil des Gehäuses, der den ersten Teil 31 des Reflektors 30 enthält, drehbar befestigt. Der Reflektor 30 kann somit aufgeklappt werden, um Zugang zu der Halterung 20 zu erhalten. Denkbar ist auch, dass der zweite Teil 32 nur auf dem ersten Teil aufgesteckt ist und daher vollständig vom ersten Teil 31 entfernbar ist. Wenn der erste Teil 31 und der zweite, obere Teil 32 des Gehäuses miteinander verbunden und geschlossen sind, umgeben sie einen Hohlraum, der vom Reflektor ausgekleidet ist. Der Reflektor ist aus einem Wärmestrahlung möglichst gut reflektierenden Material gebildet. Beispielsweise kann dies ein aufgedampftes oder abgeschiedenes reflektierendes Material sein. Vorzugsweise ist das Material metallisch, besonders vorzugsweise ist der Reflektor aus Gold gebildet.

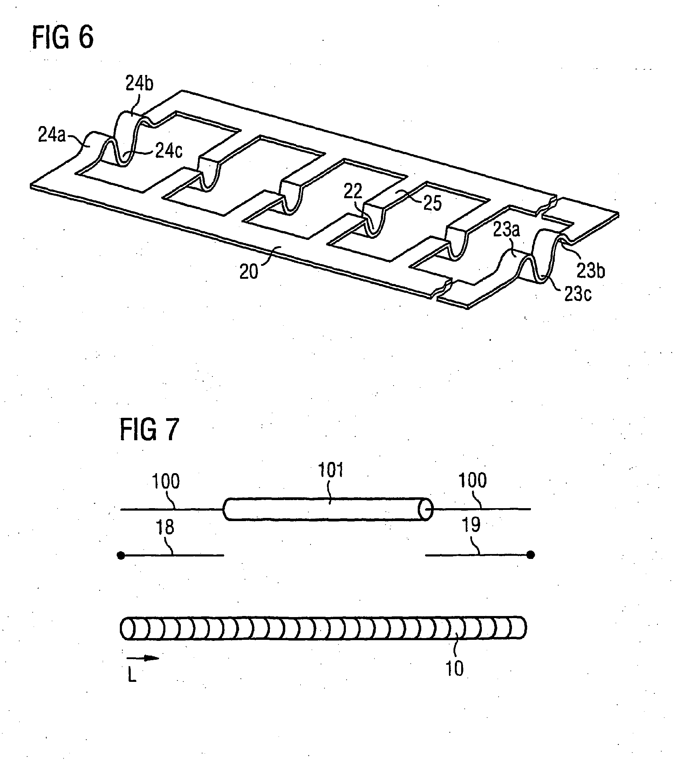

Die Halterung 20 ist als vielfach durchbrochene Abdeckung des unteren Teils 31 des Reflektors 30 ausgebildet. Die Halterung 20 umfasst den Hohlraum des unteren Teils des Gehäuses überspannende Stege mit Auflageflächen 21 und ist von dem unteren Teil des Gehäuses gestützt. Die Stege verlaufen von einer Seite zur anderen Seite des geöffneten Hohlraums. Ihre Auflageflächen 21 sind als Vertiefungen der Stege ausgebildet, in die das schrumpfbare Schutzelement eingelegt werden kann, so dass es lagerichtig positioniert wird. Die Halterung 20 ist beispielsweise über Schrauben am unteren Teil des Gehäuses befestigt oder auch lose in eine im unteren Teil des Gehäuses vorgesehene Vertiefung eingelegt. Die Halterung 20 kann jedenfalls vom unteren Teil des Gehäuses abgenommen werden, um Zugang zum Heizelement 10 zu erhalten. Die Halterung ist weiterhin in Figur 6 noch im Detail beschrieben.

Das Heizelement 10 ist vom Reflektor 30 umgeben, im unteren Teil des Gehäuses angeordnet und erstreckt sich in diesem Ausführungsbeispiel in der Längsrichtung L über die gesamte Länge des Reflektors 30. Das Heizelement 10 ist aus dem unteren Teil des Gehäuses entnehmbar. Dadurch kann die reflektierende Fläche 301 des Reflektors 30 leichter gereinigt werden. In der Figur 1 ist das Gehäuse 30 auf der linken Seite des unteren Teils ausgebrochen dargestellt, um Einsicht in den Innenraum des Gehäuses und auf den Reflektor zu gewähren.

Das Heizelement 10 wird durch eine Leistungsquelle 50, beispielsweise eine Batterie oder einen Akkumulator mit elektrischer Leistung versorgt. Die Vorrichtung kann einen Schalter zum Anschließen des Heizelements 10 an eine Leistungsquelle enthalten, der so ausgeführt ist, dass er durch Schließen des Deckels des Gehäuses betätigbar ist. Beim Schließen des Gehäuses wird die Stromversorgung für das Heizelement 10 eingeschaltet. Der Einschaltvorgang erfolgt unmittelbar und automatisch durch den Schließvorgang. Ein Schalter ist hierzu durch den Schließvorgang des Deckels betätigbar und schaltet sich beim Schließen des Gehäuses leitend. Der Heizvorgang für das Heizelement und das Einleiten des Schrumpfens für das Schutzelement erfolgt dadurch automatisch durch Schließen des Deckels 32.

Die Vorrichtung umfasst ferner einen Kühlventilator 70 zur Erzeugung eines Luftstroms um das Schutzelement 101, um Wärme vom Schutzelement 101 abzuführen. Der von dem Kühlventilator 70 erzeugte Luftstrom durchströmt den Reflektor 30 in der Längsrichtung L.

Der Kühlventilator 70 ist wie das Heizelement 10 zusammen mit im unteren Teil des Gehäuses eingebaut und dort an eine Leistungsquelle angeschlossen, so dass nur eine Leitungsführung im unteren Teil des Gehäuses erforderlich ist.

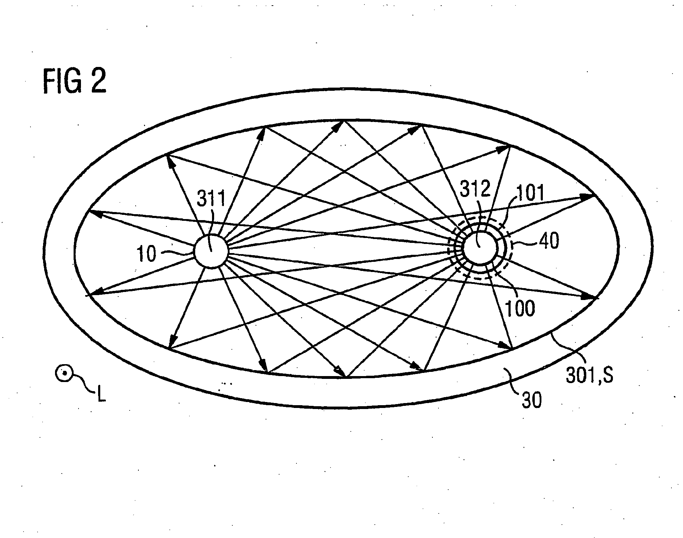

In Figur 2 ist eine besondere Ausgestaltung für den Reflektor 30 dargestellt. Der Reflektor 30 erstreckt sich in der Längst richtung L der Figur 1, die senkrecht auf der Zeichenebene der Figur 2 steht. Figur 2 stellt eine in Längsrichtung L betrachtete Schnittansicht des Reflektors dar, wenn erste und zweite Teile 31, 32 des Reflektors geschlossen sind. Die reflektierende Fläche 301 des Reflektors weist in Längsrichtung L auf der gesamten Länge des Reflektors 30 den gleichen dargestellten Querschnitt auf. Im besonders bevorzugten Ausführungsbeispiel der Figur 2 hat der Querschnitt die Form einer Ellipse mit einem ersten Brennpunkt und einem zweiten Brennpunkt. Durch die ersten und zweiten Brennpunkte der Ellipse sind erste und zweite Fokusgebiete 311 und 312 festgelegt, die sich in der Längsrichtung L erstrecken. Das Heizelement 10 ist im ersten Fokusgebiet 311 angeordnet und das von der Halterung gehaltene Schutzelement 101 ist im zweiten Fokusgebiet angeordnet. Das Heizelement 10 emittiert Wärmestrahlung mit gleichmäßiger Intensität in jede der auf dem Fokusgebiet, 311 senkrecht stehenden radialen Richtungen. Durch die elliptische Form des Querschnitts der reflektierenden Fläche 301 ist gewährleistet, dass die von dem sich längs des ersten Fokusgebietes 311 erstreckenden Heizelement 10 in radialer Richtung emittierte Wärmestrahlung auf das sich längs des zweiten Fokusgebietes 312 erstreckende Schutzelement 101 fokussiert wird. Das Material der reflektierenden Fläche 301 ist so gewählt, dass ein möglichst großer Anteil der vom Heizelement 10 ausgesandten Wärmestrahlung am Reflektor 30 reflektiert und ein möglichst kleiner Anteil absorbiert wird. Der Reflektor 30 ist im geometrischen Sinne ein translationssymmetrisch gebildeter Körper, dessen Grundfläche eine Ellipse ist. Die Innenseite des durch translatorische Verschiebung der Ellipse gebildeten Reflektors ist vorzugsweise mit Gold beschichtet.

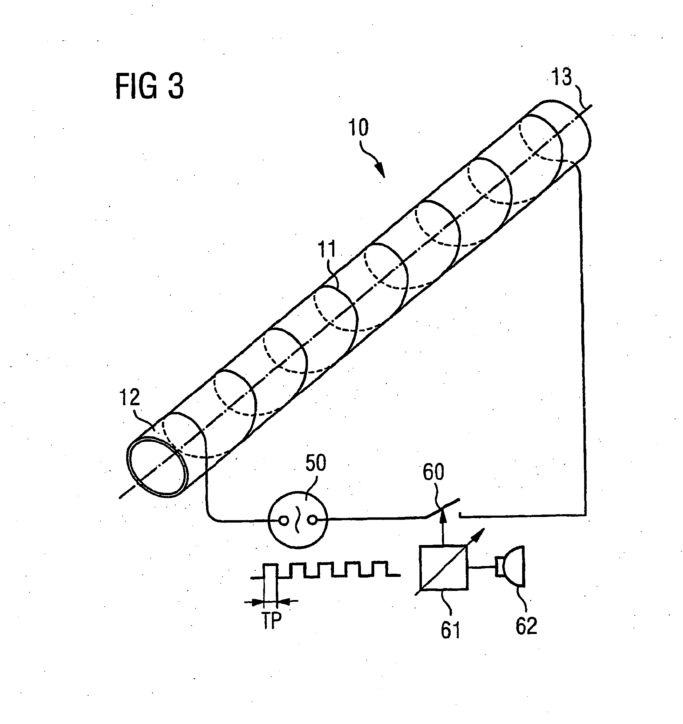

In Figur 3 ist eine Ausgestaltung des Heizelementes 10 genauer dargestellt. In dieser Ausgestaltung umfasst das Heizelement 10 einen Draht 11, an den über den Schalter 60, eine von der Leistungsquelle 50 erzeugte Spannung angelegt werden kann. Der Draht 11 ist ein ohmscher Widerstand, der elektrische Leistung aufnimmt und diese vorwiegend als Wärmestrahlung wieder abgibt. Der Draht 11 enthält vorzugsweise eine Legierung gebildet oder bestehend aus Eisen, Nickel und Aluminium, beispielsweise Kanthal A, die dafür ausgelegt ist, einen hohen spektralen Anteil der emittierten Strahlung im infraroten Bereich abzugeben. Die spektrale Verteilung der durch den Draht 11 emittierten Wärmestrahlung und insbesondere die Wellenlänge mit der höchsten spektralen Intensität lässt sich über die Stromstärke des im Draht 11 fließenden elektrischen Stroms und somit durch geeignete Wahl des elektrischen Widerstandes des Drahtes 11 und der an den Draht 11 angelegten Spannung steuern. Der elektrische Widerstand des Drahtes 11 hängt vom spezifischen Widerstand des für den Draht verwendeten Materials, der Fläche des Querschnitts und der Länge ab. Um bei gegebenem spezifischen Widerstand und gegebener Spannung eine Wärmestrahlung mit einem hohen spektralen Anteil im infraroten Bereich zu erhalten kann eine Vergrößerung des Widerstandes durch Verkleinern des Querschnitts des Drahtes 11 und Vergrößern der Länge des Drahtes 11 sinnvoll sein. Der lange und dünne Draht 11 ist daher als Spule auf ein Trägerelement 12 aufgewickelt. Das Trägerelement 12 ist beispielsweise aus einer Keramik ausgebildet, die eine hohe Temperaturbeständigkeit aufweist.

Der Schalter 60 kann zeitgesteuert ausgeschaltet werden. Beispielsweise ist ein einstellbares zeitsteuerbares Element 61. vorgesehen, welches den Schalter 60 für eine bestimmte einstellbar vorgegebene Zeit geschlossen hält. Nach Ablauf der Zeit wird der Erwärmungsvorgang unterbrochen. Der Zeitablauf beziehungsweise das Ende des Schrumpfvorgangs wird dann akustisch über einen Lautsprecher 62 dem Benutzer des Geräts angezeigt. Alternativ zu einem Lautsprecher kann eine optische Anzeige in Form einer Leuchtdiode vorgesehen werden. Die Leistungsquelle 50 ihrerseits kann so ausgeführt werden, dass sie einstellbar unterschiedliche Leistung liefert. Dadurch ist die abgestrahlte Wärmeenergie einstellbar. Der mittlere von der Leistungsquelle 50 gelieferte elektrische Strom kann entsprechend eingestellt werden, beispielsweise indem der Strom als eine Folge von Stromimpulsen bereitgestellt wird, deren Pulsbreite TP entsprechend dem gewünschten mittleren Strom eingestellt wird. Gemäß dem gewünschten mittleren Strom und der gewünschten Leistung wird die Pulsbreite moduliert.

Es ist möglich, sowohl die Pulsbreite TP als auch die durch das Stellelement 60 einstellbare Erwärmungszeit beispielsweise von einem Spleißgerät bereit zu stellen. Das Spleißgerät weist herkömmlich einen Prozessor auf, der ein Betriebssystem fährt wie beispielsweise ein Personal Computer. Dort können die entsprechenden Vorgabewerte für die an den Schrumpfschlauch zu übertragende Wärmeenergie sowie die Erwärmungszeit festgelegt werden und beispielsweise mittels eines Anschlusskabels an die Erwärmungsvorrichtung übertragen werden.

Zur Ausrichtung des Schrumpfschlauchs in einen der Brennpunkte der translatorischen Ellipse des Reflektors 30 dient die Halterung 20. Die Halterung 20 ist beispielsweise aus einem Blech gebildet, welches durch einen Stanzvorgang gebildete Stege 25 aufweist, die über dem den Reflektor 30 bildenden Hohlraum liegen. An der Stelle des Ellipsenbrennpunktes sind die Vertiefungen 20 eingedrückt, in denen der Schrumpfschlauch zu liegen kommt. Um die Ausrichtung weiterhin zu verbessern, können wie dargestellt die randseitigen Stege 23, 24 Vertiefungen 23c, 24c aufweisen, die in Richtung des Heizelements gerichtet sind. An die Vertiefungen 23c, 24c nach außen hin anschließend können vorspringende Erhöhungen 23a, 23b bzw. 24a, 24b vorgesehen werden. Selbstverständlich ist es auch möglich, einen anderen der Stege oder alle Stege wie die in Figur 6 außen liegend dargestellten Stege auszubilden

Zum Zwecke der Ausrichtung des Schrumpfschlauchs bzw. des Lichtwellenleiters weiterhin ist wie in Figur 1 dargestellt eine längsseitig angeordnete Endplatte des den Reflektor bildenden Hohlraums mit jeweiligen Vorsprüngen 34a, 34b und 35a, 35b ausgestattet. Die Vorsprünge sind beabstandet auf den Endplatten angeordnet, so dass dazwischen der Lichtwellenleiter eingelegt werden kann. Es genügt zur Ausrichtung, wenn an einer Platte nur ein Vorsprung vorgesehen ist, beispielsweise Vorsprung 34a, wobei Vorsprung 34b entfällt. An der anderen Platte kann dementsprechend der diametral gegenüber liegende Vorsprung 35b vorhanden sein, wobei der Vorsprung 35a entfällt. Grundsätzlich können auch sämtliche Vorsprünge 34a, 34b, 35a, 35b entfallen, wobei dann vielmehr die außen liegenden Stege 23, 24 des Haltelements 20 mit Vorsprüngen 23a, 23b, 24a, 24b ausgestaltet sein sollten, so dass die Ausrichtung des Schrumpfschlauchs und des Lichtwellenleiters in den Fokusbereich der Ellipse sicher erfolgt.

Schließlich zeigt Figur 7 eine schematische Seitenansicht auf den Schrumpfschlauch 101, den mit dem Schrumpfschlauch zu schützenden Lichtwellenleiter 100 sowie das Heizelement 10. Für den Fall, dass der Schrumpfschlauch 101 kürzer ist als das Heizelement 10, sind Abdeckelemente 18, 19 vorgesehen, die zwischen dem Heizelement 10 und den freigelegten Abschnitten des Lichtwellenleiters 100 angeordnet sind. Die vom Heizelement 10 abgestrahlte Wärme wird durch die Abdeckelemente 18, 19 von den freigelegten, nicht vom Schrumpfschlauch 101 bedeckten Abschnitten des Lichtwellenleiters 100 abgeschirmt. Durch einen Stellmechanismus sind die Abdeckeinrichtungen 18, 19 in ihrer Länge veränderbar. Dies kann beispielsweise durch einen Aufrollmechanismus erfolgen. Andererseits kann das Haltelement 20 vom Reflektor entfernt werden durch Entfernen der Schrauben, und geeignete in ihrer Länge an die Länge des Schrumpfschlauchs angepasste Abdeckelemente 18, 19 können dann in den unteren Teil 31 des Reflektors eingesetzt werden.

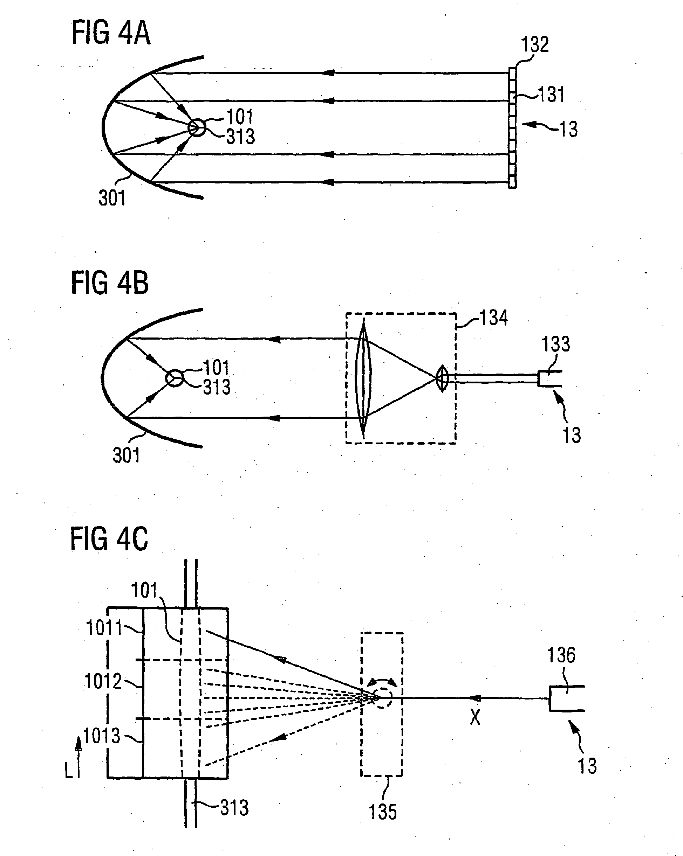

In den Figuren 4A bis 4C sind Ausführungsbeispiele der erfindungsgemäßen Vorrichtung dargestellt, die jeweils einen parabolischen Reflektor 30 mit einem Fokusgebiet 313 aufweisen. Die reflektierende Fläche 301 des Reflektors 30 weist über die gesamte Länge des Reflektors 30 quer zu der Längsrichtung L stehende Querschnitte in Form von Parabeln auf. Jeweils eine der Parabeln weist einen Brennpunkt auf. Durch die Brennpunkte der Parabeln ist das Fokusgebiet 313 des Reflektors festgelegt, das sich in der Längsrichtung L erstreckt.

In der Figur 4A ist außerdem ein Strahler 13 gezeigt, der Wärmestrahlung vorwiegend in eine Vorzugsrichtung X aussendet. Der Strahler 13 kann beispielsweise eine infrarotes Licht emittierende Diode 131, ein ganzes Feld von infrarotes Licht emittierenden Dioden 132, das sich in der Längsrichtung L erstreckt, einen Halbleiterlaser oder auch eine Halogenlampe umfassen.

In der Figur 4B ist eine Ausgestaltung dargestellt, bei der der Strahler 13 den Halbleiterlaser 133 umfasst. Außerdem ist eine Optik 134 zur Aufweitung des vom Strahler 13 erzeugten Strahls vorgesehen. Der durch den Halbleiterlaser 133 erzeugte Laserstrahl wird durch die Optik 134 zu einem Strahlungbündel mit dem Durchmesser D aufgeweitet. Der Durchmesser ist beispielsweise so gewählt, dass er der Abmessung des Schutzelementes 101 in der Längsrichtung L entspricht. Durch den parabolischen Reflektor 30 wird das Strahlungsbündel mit dem Durchmesser D in einer zur Längsrichtung L senkrechten Ebene auf ein sich entlang des Fokusgebietes 313 erstreckendes Schutzelement 101 fokussiert.

In der Figur 4C ist eine Ausgestaltung gezeigt, bei der eine Optik 135 zur Ablenkung eines von dem Strahler 13 erzeugten Strahls vorgesehen ist. Die Optik 135 oder zumindest eine Komponente der Optik 135 oszilliert beispielsweise in der Längsrichtung L oder um eine zu der Längsrichtung L und der Richtung des vom Strahler 13 erzeugten Strahls senkrechte Richtung, um die Intensität der Wärmestrahlung auf das sich in der Längsrichtung L erstreckende Fokusgebiet zu verteilen.

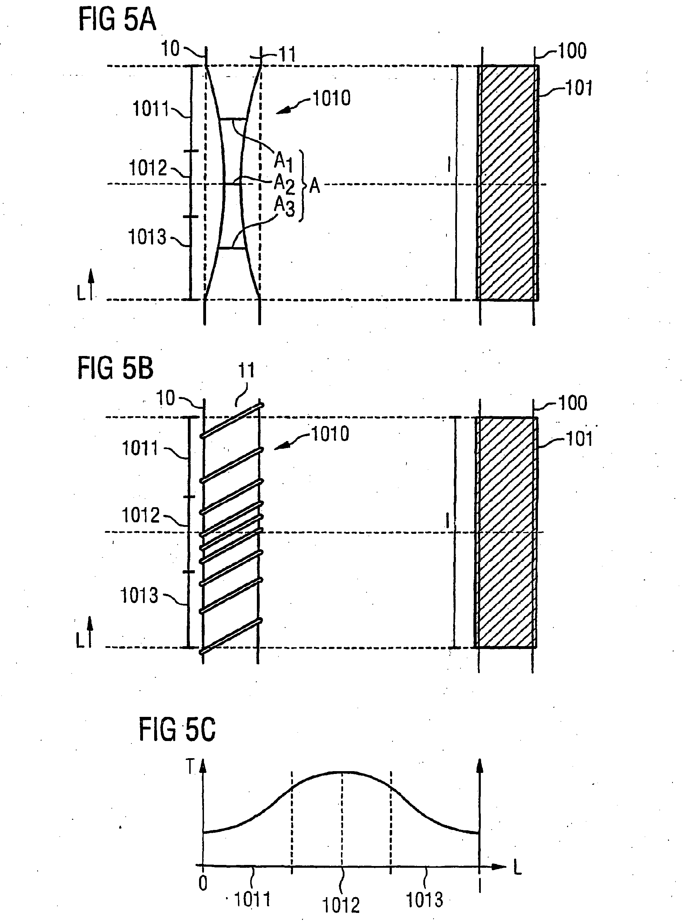

In der Figur 5A ist das Heizelement 10 in einer bevorzugten Ausgestaltung der Erfindung dargestellt. Gegenüber einem Schutzelement 101 der Länge 1, das einen sich in der Längsrichtung L erstreckenden Lichtwellenleiter 100 umgibt, ist ein Längsabschnitt 1010 des Heizelementes 10 angeordnet. Das Heizelement 10 umfasst einen Draht 11, der sich in der Längsrichtung L erstreckt. Die jeweilige Querschnittsfläche A des Drahtes 11 weist zwischen Enden des Längsabschnittes 1010 des Heizelements 10 eine Verjüngung 111 auf. An verschiedenen Stellen des Längsabschnittes 1010 vorliegenden Querschnittsflächen A₁, A₂, A₃ sind geringer in einem mittleren Bereich 1012 des Längsabschnitts 1010 und nehmen nach außen hin in den an den mittleren Bereich angrenzenden äußeren Bereich 1011, 1013 zu. An der Verjüngung 111 sind die Stromdichte des elektrischen Stromes und die dadurch bewirkte Erwärmung und Strahlungsemission im dem mittleren Bereich 1012 erhöht. Die Energiedichte im Fokusbereich des Schrumpfschlauchs und des Lichtwellenleiters ist in dessen Mitte erhöht, in den äußeren Abschnitten niedriger.

In der Figur 5B ist das Heizelement 10 in einer anderen bevorzugten Ausgestaltung dargestellt. Gegenüber einem Schutzelement 101 der Länge 1, das einen sich in der Längsrichtung L erstreckenden Lichtwellenleiter 100 umgibt, ist ein Längsabschnitt 1010 des Heizelementes 10 angeordnet. Das Heizelement 10 umfasst einen Draht 11, der in Form einer Helix um einen sich in der Längsrichtung L erstreckenden Keramikkörper 12 gewickelt ist. Die Ganghöhe der Helix 112 ist in einem mittleren Bereich 1012 des Längsabschnittes 1010 des Heizelements 10 geringer. Die Helix ist im mittleren Bereich dichter gewickelt als in den äußeren Bereichen. Im mittleren Bereich 1012 befinden sich also mehr Windungen pro Länge als in den daran angrenzenden äußeren Bereichen 1011, 1013. In dem mittleren Bereich 1012 ist die abgestrahlte Wärmemenge pro Längenabschnitt des Heizelementes 10 erhöht gegenüber den äußeren Breichen 1011, 1013.

Bezugsnehmend auf die im Zusammenhang mit Figur 4C beschriebene oszillierende Optik 135 bewegt sich ein Auftreffpunkt 1311 des Strahlbündels 131 in Abhängigkeit von der Zeit entlang des Schutzelements 101. Die mittlere Verweildauer, des Auftreffpunktes des Strahlbündels 131 an einer Stelle des Schutzelements entspricht dem Betrag der reziproken Geschwindigkeit des Auftreffpunktes.

In der Figur 5C ist eine bei geeignetem Zeitverlauf der Oszillation sich ergebende Verteilung der Temperatur entlang des Schutzelementes dargestellt. In einem in der Längsrichtung L zwischen den Endbereichen 1011 und 1013 angeordneten mittleren Bereich 1012 des Schutzelementes 101 ist die Verweildauer des Auftreffpunktes des Strahlbündels erhöht. Dadurch ist auch die mittlere Temperatur des Schutzelementes 101 in dem mittleren Bereich 1012 höher als in den Endbereichen 1011 und 1013.

Den anhand der Figur 4C und den Figuren 5A bis 5C beschriebenen Ausgestaltungen ist gemeinsam, dass ein in der Längsrichtung L mittlerer Bereich 1012 des Schutzelementes einer erhöhten Strahlungsleistung ausgesetzt wird, so dass die Temperatur in diesem Bereich schneller ansteigt als ausserhalb dieses Bereiches. Die für das Einsetzen des Schrumpfprozesses notwendige Temperatur wird also zunächst in diesem Bereich und erst dann an weiter außen gelegenen Bereichen erreicht.

Auf diese Weise wird das Schutzelement in Längsrichtung von der Mitte beginnend nach außen aufgeschrumpft, so dass von dem Schutzelement umgebene Luft beim Aufschrumpfen nicht eingeschlossen, sondern von dem mittleren Bereich 1012 des Schutzelementes nach außen abtransportiert wird. Lufteinschlüsse im Schutzelement werden dadurch vermieden, indem das Schutzelement von der Mitte nach außen auf den darin befindlichen Lichtwellenleiter geschrumpft wird. Die eingeschlossene Luft wird daduch automatisch aus dem schrumpfenden Schutzelement von innen nach außen entfernt.

Als weitere Ausgestaltung des Heizelements ist ein spulenförmiger als Helix gewickelter Draht geeignet, bei der der Draht im mittleren Bereich des Heizelements geringeren Durchmesser aufweist als außerhalb. Weiterhin ist denkbar, einen als Spule gewickelten Draht zu verwenden, wobei die Spule im mittleren Bereich einen geringeren Spulendurchmesser aufweist und dadurch näher in der Brennlinie der translatorischen Ellipse liegt und im äußeren Bereich des Heizelements einen größeren Spulendurchmesser aufweist und dadurch leicht außerhalb des Brennpunkts der Ellipse liegt und dadurch eine weniger gut fokussierte Wärmeentwicklung erzeugt.

## Patentansprüche

1. Vorrichtung zum Aubringen einesdurch Zuführen von Wärme schrumpfbaren Schutzelementes (101) auf ein lang gestrecktes Element, insbesondere einen Lichtwellenleiter (100), umfassend:
ein Heizelement (10), ausgebildet zum Aussenden von Wärmestrahlung,
eine Halterung (20), ausgebildet, das Schutzelement (101) zu halten,
einen Reflektor (30), ausgebildet, die von dem Heizelement (10) ausgesandte Strahlung zu reflektieren und auf das Schutzelement (101) zu fokussieren, **dadurch gekennzeichnet, daß** der Reflektor (30) einen ersten Teil (31) und einen zweiten Teil (32) aufweist, die relativ zueinander beweglich sind.

2. Vorrichtung nach Anspruch 1, bei der das Schutzelement (101) sich in eine Längsrichtung (L) erstreckt, das Heizelement (10) sich parallel zu dem Schutzelement (101) in die Längsrichtung (L) verlaufend erstreckt und das Heizelement (10) die Wärmestrahlung gleichmäßig in alle zur Längsrichtung (L) senkrechten Richtungen aussendet.

3. Vorrichtung nach Anspruch 2, bei der der Reflektor (30) eine sich entlang zu der Längsrichtung (L) erstreckende reflektierende Fläche (301) umfasst, von der ein quer zur Längsrichtung (L) gebildeter Querschnitt die Form einer Ellipse aufweisen.

4. Vorrichtung nach Anspruch 3, bei der die Ellipse einen ersten Brennpunkt und einen zweiten Brennpunkt aufweist, das Heizelement (10) sich durch den ersten Brennpunkt oder durch einen Bereich nahe dem ersten Brennpunkt und das Schutzelement (101) sich durch den zweiten Brennpunkt oder einen Bereich nahe dem zweiten Brennpunkt erstreckt.

5. Vorrichtung nach einem der Ansprüche 1 bis 4, bei der das Heizelement (10) einen Draht (11) aus einem elektrisch leitenden Material, das infolge elektrischen Stromflusses Wärmestrahlung aussendet, umfasst.

6. Vorrichtung nach Anspruch 5, bei der das Heizelement (10) einen der Halterung (20) gegenüber liegenden Längsabschnitt aufweist, der äußere Abschnitte (1011, 1013) und einen dazwischen angeordneten mittleren Abschnitt (1012) aufweist, und eine Querschnittsfläche (A) des Drahtes (11) in dem mittleren Abschnitt (1012) kleiner ist als eine Querschnittsfläche in einem der äußeren Abschnitte (1011, 1013).

7. Vorrichtung nach Anspruch 5 oder 6, bei der der Draht (11) in einem mittleren Abschnitt (1012) mit kleinerem Querschnitt (A) ausgebildet ist als in einem der äußeren Abschnitte (1011, 1013).

8. Vorrichtung nach einem der Ansprüche 5 bis 7, bei der der Draht (11) ein Metall oder eine metallische Legierung enthält.

9. Vorrichtung nach einem der Ansprüche 5 bis 8, bei der der Draht eine Legierung enthält, die Eisen, Nickel und Aluminium umfasst.

10. Vorrichtung nach einem der Ansprüche 5 bis 9, bei der der Draht (11) in Form einer Helix (112) gewendelt ist.

11. Vorrichtung nach Anspruch 10, bei der das Heizelement (10) einen der Halterung (20) gegenüber liegenden Längsabschnitt aufweist, der äußere Abschnitte (1011, 1013) und einen dazwischen angeordneten mittleren Abschnitt (1012) aufweist, wobei die Helix in dem mittleren Abschnitt (1012) mehr Windungen innerhalb einer vorgegebenen Länge aufweist als innerhalb der vorgegebenen Länge in einem der äußeren Abschnitte (1011, 1013).

12. Vorrichtung nach einem der Ansprüche 5 bis 11, bei der das Heizelement (10) ein Trägerelement (12) enthält und der Draht (11) als Spule auf das Trägerelement (12) aufgewickelt ist.

13. Vorrichtung nach Anspruch 12, bei der das Trägerelement (12) aus Keramik gebildet ist.

14. Vorrichtung nach einem der Ansprüche 1 bis 13, bei der der erste Teil (31) mit dem zweiten Teil (32) über ein Scharnier (33) verbunden ist, so dass der erste Teil (31) des Reflektors (30) aufklappbar ist.

15. Vorrichtung nach einem der Ansprüche 1 bis 13, bei der der erste Teil (31) vom zweiten Teil (32) abnehmbar ist.

16. Vorrichtung nach einem der Ansprüche 1 bis 15, bei der das Heizelement (10) im ersten Teil (31) des Reflektors (30) angeordnet ist und aus dem ersten Teil entnehmbar ist.

17. Vorrichtung nach einem der Ansprüche 1 bis 16, umfassend einen Kühlventilator (70) zur Erzeugung eines Luftstroms um das Schutzelement (101).

18. Vorrichtung nach einem der Ansprüche 1 bis 17, bei der die Halterung (20) Auflageabschnitte (21, 22) aufweist, das Schutzelement (101) einen Abschnitt des lang gestreckten Elements (100) umgibt und das Schutzelement (100) auf den Auflageabschnitten (21) derart lagerbar ist, dass die Wärmestrahlung auf das Schutzelement (101) fokussiert ist.

19. Vorrichtung nach Anspruch 1, bei der das Heizelement (10) einen Strahler (13) umfasst, der die Wärmestrahlung vorwiegend in eine Vorzugsrichtung aussendet.

20. Vorrichtung nach Anspruch 19, bei der der Strahler (13), eine infrarotes Licht emittierende Diode (131) umfasst:

21. Vorrichtung nach Anspruch 19 oder 20, bei der der Strahler (13) ein Feld von infrarotes Licht emittierenden Dioden (132) umfasst.

22. Vorrichtung nach Anspruch 19, bei der der Strahler (13) einen Halbleiterlaser (133) umfasst.

23. Vorrichtung nach einem der Ansprüche 19 bis 22, zusätzlich umfassend eine Optik (134) zur Aufweitung eines Strahlbündels der vom Strahler (13) ausgesandten Wärmestrahlung.

24. Vorrichtung nach einem der Ansprüche 19 bis 23, bei der sich das Schutzelement (101) in einer Längsrichtung (L) erstreckt, der Reflektor (30) eine sich in der Längsrichtung (L) erstreckende reflektierende Fläche (301) umfasst, deren zur Längsrichtung (L) senkrechten Querschnitte die Form von Parabeln aufweisen, jeweils eine der Parabeln einen Brennpunkt aufweist und die Brennpunkte der Parabeln ein Gebiet (313) festlegen, in dem das Schutzelement (101) angeordnet ist.

25. Vorrichtung nach Anspruch 24, zusätzlich umfassend eine Optik (135), die in der Längsrichtung (L) verschiebbar oder um eine zu der Längsrichtung (L) senkrechte Achse (X) oszillierbar ist, um ein Strahlbündel (131) der vom Strahler (13) ausgesandten Wärmestrahlung abzulenken und über das sich in der Längsrichtung (L) erstreckende Schutzelement (101) zu verteilen.

26. Vorrichtung nach Anspruch 25, bei der das Schutzelement in der Längsrichtung (L) Endbereiche (1011, 1013) und einen dazwischen angeordneten mittleren Bereich (1012) aufweist und eine Verweildauer des Strahlbündels (131) in dem mittleren Bereich (1012) höher ist als in den Endbereichen (1011, 1013).

27. Vorrichtung nach einem der Ansprüche 2 bis 3, bei der eine Abdeckeinrichtung (18, 19) vorgesehen ist, die zwischen dem Heizelement (10) und dem lang gestreckten Element (100) angeordnet ist und die vom Heizelement (10) im Betrieb abgestrahlte Wärmestrahlung vom lang gestreckten Element (100) abschirmt.

28. Vorrichtung nach Anspruch 27, bei der die Abdeckeinrichtung (18, 19) in der Längsrichtung (L) eine veränderbare Längsausdehnung hat.

29. Verfahren zum Aufbringen eines durch Zuführen von Wärme schrumpfbaren Schutzelementes (101) auf einen Abschnitt eines Lichtwellenleiters (100), umfassend die Schritte:
Bereitstellen des Lichtwellenleiters (100) und des einen Abschnitt (102) des Lichtwellenleiters (100) umgebenden Schutzelementes (101),
Vorsehen eines von einem Reflektor (30) umgebenen Hohlraums, der einen ersten und einen zweiten Teil (31, 32) aufweist, die zueinander beweglich sind, Entfernen oder Aufklappen des zweiten Teils (32), Einlegen des Schutzelements (101) und des Lichtwellenleiters (100), Zusammenfügen der ersten und zweite Teile (31, 32)
Aussenden von Wärmestrahlung,
Reflektieren der Wärmestrahlung,
Fokussieren der Wärmestrahlung auf das Schutzelement (101),
Erwärmen und **dadurch** bewirktes Aufschrumpfen des Schutzelementes (101) auf den Abschnitt (102) des Lichtwellenleiters (100).

30. Verfahren nach Anspruch 29, bei dem der Schritt des Fokussierens der Wärmestrahlung umfasst:
Fokussieren der Wärmestrahlung auf ein sich in einer Längsrichtung (L) erstreckendes Gebiet (312, 313).

31. Verfahren nach Anspruch 30, bei dem der Schritt des Fokussierens der Wärmestrahlung ein Erzeugen einer niedrigeren Konzentration der Wärmestrahlung in äußeren Abschnitten (1011, 1013) umfasst und ein Erzeugen einer höheren Konzentration der Wärmestrahlung in einem mittleren Bereich (1012) des Schutzelements (101), wobei der mittlere Bereich (1012) zwischen den äußeren Bereichen (1011, 1013) angeordnet ist.

32. Verfahren nach Anspruch 29, bei dem der Hohlraum einen elliptischen Querschnitt aufweist, umfassend den Schritt des Positionierens des Schutzelements (101) in einem Brennpunkt der Ellipse und anschließend Zusammenfügen der ersten und zweite Teile (31, 32) des Reflektors (30).

33. Verfahren nach einem der Ansprüche 29 bis 32, umfassend ein Abschirmen der Wärmestrahlung im Hohlraum von den nicht vom Schutzelement (101) bedeckten Abschnitten des Lichtwellenleiters (100).

## Claims

1. A device for fitting a protective element (101) shrinkable by means of the supply of heat onto an elongated element, in particular an optical waveguide (100), comprising:
a heating element (10), adapted to emit thermal radiation,
a mount (20), adapted to hold the protective element (101),
a reflector (30), adapted to reflect the radiation emitted by the heating element (10) and focusing it onto the protective element (101), **characterized in that** the reflector (30) has a first part (31) and a second part (32), which are movable relative to one another.

2. The device as claimed in claim 1, in which the protective element (101) extends in a longitudinal direction (L), the heating element (10) extends in a manner running parallel to the protective element (101) in the longitudinal direction (L), and the heating element (10) emits the thermal radiation uniformly in all directions perpendicular to the longitudinal direction (L).

3. The device as claimed in claim 2, in which the reflector (30) comprises a reflective area (301) extending along the longitudinal direction (L), of which area a cross section formed transversely with respect to the longitudinal direction (L) have the form of an ellipse.

4. The device as claimed in claim 3, in which the ellipse has a first focal point and a second focal point, the heating element (10) extends through the first focal point or through a region near the first focal point, and the protective element (101) extends through the second focal point or a region near the second focal point.

5. The device as claimed in one of claims 1 to 4, in which the heating element (10) comprises a wire (11) made of an electrically conductive material that emits thermal radiation on account of electric current flow.

6. The device as claimed in claim 5, in which the heating element (10) has a longitudinal section lying opposite the mount (20) and having outer sections (1011, 1013) and a central section (1012) arranged in between, and a cross-sectional area (A) of the wire (11) in the central section (1012) is smaller than a cross-sectional area in one of the outer sections (1011, 1013).

7. The device as claimed in claim 5 or 6, in which the wire (11) is formed with a smaller cross section (A) in a central section (1012) than in one of the outer sections (1011, 1013).

8. The device as claimed in one of claims 5 to 7, in which the wire (11) contains a metal or a metallic alloy.

9. The device as claimed in one of claims 5 to 8, in which the wire contains an alloy comprising iron, nickel and aluminum.

10. The device as claimed in one of claims 5 to 9, in which the wire (11) is coiled in the form of a helix (112).

11. The device as claimed in claim 10, in which the heating element (10) has a longitudinal section lying opposite the mount (20) and having outer sections (1011, 1013) and a central section (1012) arranged in between, the helix having more turns within a predetermined length in the central section (1012) than within the predetermined length in one of the outer sections (1011, 1013).

12. The device as claimed in one of claims 5 to 11, in which the heating element (10) contains a carrier element (12) and the wire (11) is wound as a coil onto the carrier element (12).

13. The device as claimed in claim 12, in which the carrier element (12) is formed from ceramic.

14. The device as claimed in one of claims 1 to 13, in which the first part (31) is connected to the second part (32) via a hinge (33), such that the first part (31) of the reflector (30) can be swung open.

15. The device as claimed in one of claims 1 to 13, in which the first part (31) can be detached from the second part (32).

16. The device as claimed in one of claims 1 to 15, in which the heating element (10) is arranged in the first part (31) of the reflector (30) and can be removed from the first part.

17. The device as claimed in one of claims 1 to 16, comprising a cooling fan (70) for generating an air stream around the protective element (101).

18. The device as claimed in one of claims 1 to 17, in which the mount (20) has bearing sections (21, 22), the protective element (101) surrounds a section of the elongated element (100), and the protective element (100) can be mounted on the bearing sections (21) in such a way that the thermal radiation is focused onto the protective element (101).

19. The device as claimed in claim 1, in which the heating element (10) comprises a radiator (13), which emits the thermal radiation predominantly in a preferred direction.

20. The device as claimed in claim 19, in which the radiator (13) comprises an infrared-light-emitting diode (131).

21. The device as claimed in claim 19 or 20, in which the radiator (13) comprises an array of infrared-light-emitting diodes (132).

22. The device as claimed in claim 19, in which the radiator (13) comprises a semiconductor laser (133).

23. The device as claimed in one of claims 19 to 22, additionally comprising an optical arrangement (134) for expanding a beam bundle of the thermal radiation emitted by the radiator (13).

24. The device as claimed in one of claims 19 to 23, in which the protective element (101) extends in a longitudinal direction (L), the reflector (30) comprises a reflective area (301) which extends in the longitudinal direction (L) and whose cross sections perpendicular to the longitudinal direction (L) have the form of parabolas, one of the parabolas in each case has a focal point, and the focal points of the parabolas define a zone (313) in which the protective element (101) is arranged.

25. The device as claimed in claim 24, additionally comprising an optical arrangement (135) which can be displaced in the longitudinal direction (L) or can be oscillated about an axis (X) perpendicular to the longitudinal direction (L) in order to deflect a beam bundle (131) of the thermal radiation emitted by the radiator (13) and to distribute it over the protective element (101) extending in the longitudinal direction (L).

26. The device as claimed in claim 25, in which the protective element has, in the longitudinal direction (L), end regions (1011, 1013) and a central region (1012) arranged in between, and a residence duration of the beam bundle (131) is higher in the central region (1012) than in the end regions (1011, 1013).

27. The device as claimed in one of claims 2 to 3, in which a covering device (18, 19) is provided, which is arranged between the heating element (10) and the elongated element (100) and shields the elongated element (100) from thermal radiation emitted by the heating element (10) during operation.

28. The device as claimed in claim 27, in which the covering device (18, 19) has a variable longitudinal extent in the longitudinal direction (L).

29. A method for fitting a protective element (101) shrinkable by means of the supply of heat onto a section of an optical waveguide (100), comprising the following steps:
providing the optical waveguide (100) and of the protective element (101) surrounding a section (102) of the optical waveguide (100),
providing a cavity surrounded by a reflector (30) and having a first and a second part (31, 32), which are movable with respect to one another, removal or swinging open of the second part (32), insertion of the protective element (101) and of the optical waveguide (100), joining together of the first and second parts (31, 32),
emitting thermal radiation,
reflecting the thermal radiation,
focusing the thermal radiation onto the protective element (101),
heating and resultant shrinking the protective element (101) onto the section (102) of the optical waveguide (100).

30. The method as claimed in claim 29, in which the step of focusing the thermal radiation comprises:
focusing the thermal radiation onto a zone (312, 313) extending in a longitudinal direction (L).

31. The method as claimed in claim 30, in which the step of focusing of the thermal radiation comprises generating a lower concentration of the thermal radiation in outer sections (1011, 1013) and generating a higher concentration of the thermal radiation in a central region (1012) of the protective element (101), the central region (1012) being arranged between the outer regions (1011, 1013).

32. The method as claimed in claim 30, in which the cavity has an elliptical cross section, comprising the step of positioning the protective element (101) at a focal point of the ellipse and subsequently joining together the first and second parts (31, 32) of the reflector (30).

33. The method as claimed in one of claims 29 to 32, comprising shielding the sections of the optical waveguide (100) which are not covered by the protective element (101) from the thermal radiation in the cavity.

## Revendications

1. Dispositif de dépôt d'un élément ( 101 ) de protection rétrécissable par apport de chaleur sur un élément s'étendant en longueur, notamment sur une fibre ( 100 ) optique, comprenant :
un élément ( 10 ) chauffant, constitué pour émettre du rayonnement calorifique,
une fixation ( 20 ), constituée pour tenir l'élément ( 101 ) de protection,
un réflecteur ( 30 ), constitué pour réfléchir du rayonnement émis par l'élément ( 10 ) chauffant et le focaliser sur l'élément ( 101 ) de protection, **caractérisé en ce que** le réflecteur ( 30 ) a une première partie ( 31 ) et une deuxième partie ( 32 ) qui sont mobiles l'une par rapport à l'autre.

2. Dispositif suivant la revendication 1, dans lequel l'élément ( 101 ) de protection s'étend dans une direction ( L ) longitudinale, l'élément ( 10 ) chauffant s'étend parallèlement à l'élément ( 101 ) de protection dans la direction ( L ) longitudinale et l'élément ( 10 ) chauffant émet le rayonnement calorifique uniformément dans toutes les directions perpendiculaires à la direction ( L ) longitudinale.

3. Dispositif suivant la revendication 2, dans lequel le réflecteur ( 30 ) comprend une surface ( 301 ) réfléchissante s'étendant le long de la direction ( L ) longitudinale et dont une section transversale formée transversalement à la direction ( L ) longitudinale a la forme d'une ellipse.

4. Dispositif suivant la revendication 3, dans lequel l'ellipse a un premier foyer et un deuxième foyer, l'élément ( 10 ) chauffant passe par le premier foyer ou par une région proche du premier foyer et l'élément ( 101 ) de protection passe par le deuxième foyer ou par une région proche du deuxième foyer.

5. Dispositif suivant l'une des revendications 1 à 4, dans lequel l'élément ( 10 ) chauffant comprend un fil ( 11 ) en un matériau conducteur de l'électricité, qui émet du rayonnement calorifique en raison du flux de courant électrique.

6. Dispositif suivant la revendication 5, dans lequel l'élément ( 10 ) chauffant a un tronçon longitudinal opposé à la fixation ( 20 ), qui a des tronçons ( 1011, 1013 ) extérieurs et un tronçon ( 1012 ) médian disposé entre eux et une surface ( A ) de section transversale du fil ( 11 ) dans le tronçon ( 1012 ) médian est plus petite qu'une surface de section transversale dans l'un des tronçons ( 1011, 1013 ) extérieurs.

7. Dispositif suivant la revendication 5 ou 6, dans lequel le fil ( 11 ) a, dans un tronçon ( 1012 ) médian, une section transversale plus petite que dans l'un des tronçons ( 1011, 1013 ) extérieurs.

8. Dispositif suivant l'une des revendications 5 à 7, dans lequel le fil ( 11 ) contient un métal ou un alliage métallique.

9. Dispositif suivant l'une des revendications 5 à 8, dans lequel le fil contient un alliage qui comprend du fer, du nickel et de l'aluminium.

10. Dispositif suivant l'une des revendications 5 à 9, dans lequel le fil ( 11 ) est enroulé sous la forme d'une hélice ( 112 ).

11. Dispositif suivant la revendication 10, dans lequel l'élément ( 10 ) chauffant a un tronçon longitudinal qui est opposé à la fixation ( 20 ) et qui a des tronçons ( 1011, 1013 ) extérieurs et un tronçon ( 1012 ) médian disposé entre eux, l'hélice ayant, dans le tronçon ( 1012 ) médian, plus de spires dans une longueur prescrite que dans la longueur prescrite dans l'un des tronçons ( 1011, 1013 ) extérieurs.

12. Dispositif suivant l'une des revendications 5 à 11, dans lequel l'élément ( 10 ) chauffant comporte un élément ( 12 ) de support et le fil ( 11 ) est enroulé sous la forme d'une bobine sur l'élément ( 12 ) de support.

13. Dispositif suivant la revendication 12, dans lequel l'élément ( 12 ) de support est en céramique.

14. Dispositif suivant l'une des revendications 1 à 13, dans lequel la première partie ( 31 ) est reliée à la deuxième partie ( 32 ) par une charnière ( 33 ), de sorte que la première partie ( 31 ) du réflecteur ( 30 ) peut être rabattue.

15. Dispositif suivant l'une des revendications 1 à 13, dans lequel la première partie ( 31 ) peut être retirée de la deuxième partie ( 32 ).

16. Dispositif suivant l'une des revendications 1 à 15, dans lequel l'élément ( 10 ) chauffant est disposé dans la première partie ( 31 ) du réflecteur ( 30 ) et peut être retiré de la première partie.

17. Dispositif suivant l'une des revendications 1 à 16, comprenant un ventilateur ( 70 ) de refroidissement pour produire un courant d'air autour de l'élément ( 101 ) de protection.

18. Dispositif suivant l'une des revendications 1 à 17, dans lequel la fixation ( 20 ) a des tronçons ( 21, 22 ) d'appui, l'élément ( 101 ) de protection entoure un tronçon de l'élément ( 100 ) s'étendant en longueur et l'élément ( 100 ) de protection peut être mis sur les tronçons ( 21 ) d'appui, de manière à ce que le rayonnement calorifique soit focalisé sur l'élément ( 101 ) de protection.

19. Dispositif suivant la revendication 1, dans lequel l'élément ( 10 ) chauffant comprend un radiateur qui émet le rayonnement calorifique principalement dans une direction préférentielle.

20. Dispositif suivant la revendication 19, dans lequel le radiateur ( 13 ) est une diode ( 131 ) émettant de la lumière infrarouge.

21. Dispositif suivant la revendication 19 ou 20, dans lequel le radiateur ( 13 ) comprend un champ de diodes ( 132 ) émettant de la lumière infrarouge.

22. Dispositif suivant la revendication 19, dans lequel le radiateur ( 13 ) comprend un laser ( 133 ) à semi-conducteur.

23. Dispositif suivant l'une des revendications 19 à 22, comprenant, en outre, une optique ( 134 ) d'élargissement d'un faisceau du rayonnement calorifique émis par le radiateur ( 13 ).

24. Dispositif suivant l'une des revendications 19 à 23, dans lequel l'élément ( 101 ) de protection s'étend dans une direction ( L ) longitudinale, le réflecteur ( 30 ) comprend une surface ( 301 ) réfléchissante s'étendant dans la direction longitudinale et dont des sections transversales perpendiculaires à la direction ( L ) longitudinale ont la forme de paraboles, respectivement l'une des paraboles ayant un foyer et les foyers des paraboles déterminant une zone ( 313 ) dans laquelle l'élément ( 101 ) de protection est disposé.

25. Dispositif suivant la revendication 24, comprenant, en outre, une optique ( 135 ) qui peut coulisser dans la direction ( L ) longitudinale ou qui peut osciller autour d'un axe ( X ) perpendiculaire à la direction ( L ) longitudinale, pour dévier un faisceau ( 131 ) du rayonnement calorifique émis par le radiateur ( 13 ) et le répartir sur l'élément ( 101 ) de protection s'étendant dans la direction ( L ) longitudinale.

26. Dispositif suivant la revendication 25, dans lequel l'élément de protection a, dans la direction ( L ) longitudinale, des régions ( 1011, 1013 ) d'extrémité et une région ( 1012 ) médiane disposée entre elles et une durée de séjour du faisceau ( 131 ) de rayonnement est plus grande dans la région ( 1012 ) médiane que dans les régions ( 1011, 1013 ) d'extrémité.

27. Dispositif suivant l'une des revendications 2 à 3, dans lequel il est prévu un dispositif ( 18, 19 ) de recouvrement, qui est disposé entre l'élément ( 10 ) chauffant et l'élément ( 100 ) s'étendant en longueur et qui protège l'élément ( 100 ) s'étendant en longueur du rayonnement calorifique émis en fonctionnement par l'élément ( 10 ) chauffant.

28. Dispositif suivant la revendication 27, dans lequel le dispositif ( 18, 19 ) de recouvrement a, dans la direction ( L ) longitudinale, une étendue en longueur variable.

29. Procédé de dépôt d'un élément ( 101 ) de protection rétrécissable par apport de chaleur sur un tronçon d'une fibre ( 100 ) optique, comprenant les stades dans lesquels :
on se procure la fibre ( 100 ) optique et l'élément ( 101 ) de protection entourant un tronçon ( 102 ) de la fibre ( 100 ) optique,
on prévoit une cavité qui est entourée d'un réflecteur ( 30 ) et qui a une première et une deuxième partie ( 31, 32 ) mobiles l'une par rapport à l'autre, on enlève ou on fait basculer la deuxième partie ( 32 ), on met l'élément ( 101 ) de protection et la fibre ( 100 ) optique, on assemble les première et deuxième parties ( 31, 32 ),
on émet du rayonnement calorifique,
on réfléchit le rayonnement calorifique,
on focalise le rayonnement calorifique sur l'élément ( 101 ) de protection,
on chauffe et on provoque ainsi le rétrécissement de l'élément ( 101 ) de protection sur le tronçon ( 102 ) de la fibre ( 100 ) optique.

30. Procédé suivant la revendication 29, dans lequel le stade de focalisation du rayonnement calorifique comprend :
la focalisation du rayonnement calorifique sur une zone ( 312, 313 ) s'étendant dans une direction ( L ) longitudinale.

31. Procédé suivant la revendication 30, dans lequel le stade de focalisation du rayonnement calorifique comprend une production d'une plus petite concentration du rayonnement calorifique dans les tronçons ( 1011, 1013 ) extérieurs et une production d'une plus grande concentration du rayonnement calorifique dans une zone ( 1012 ) médiane de l'élément ( 101 ) de protection, la zone ( 1012 ) médiane étant disposée entre les zones ( 1011, 1013 ) extérieures.

32. Procédé suivant la revendication 29, dans lequel la cavité a une section transversale elliptique comprenant le stade de mise en position de l'élément ( 101 ) de protection au foyer de l'ellipse et ensuite l'assemblage de la première et de la deuxième partie ( 31, 32 ) du réflecteur ( 30 ).

33. Procédé suivant l'une des revendications 29 à 32, comprenant une protection vis-à-vis du rayonnement calorifique dans la cavité des tronçons de la fibre ( 100 ) optique, qui ne sont pas recouverts de l'élément ( 101 ) de protection.
